# EUROPEAN PATENT SPECIFICATION

(11) **EP 0 357 543 B1**
(45) Date of publication and mention of the grant of the patent: **27.07.1994**
(21) Application number: 89730192.5
(22) Date of filing: 22.08.1989
(51) Int. Cl.: B60J 5/06, E05D 15/10

(54) **Motor-vehicle with sliding doors**
Kraftfahrzeug mit Schiebetüren
Véhicule automobile comportant des portes coulissantes

(30) Priority: 29.08.1988 JP 214685/88; 29.08.1988 JP 214689/88; 06.09.1988 JP 222649/88
(43) Date of publication of application: 07.03.1990
(73) Proprietor: SUZUKI MOTOR CORPORATION, Hamamatsu-shi, Shizuoka-ken (JP)
(72) Inventor: Asai, Keiichi, Hamamatsu-shi Shizuoka Pref. (JP); Hori, Kazunobu, Kosai-shi Shizuoka Pref. (JP); Mochizuki, Chizuko, Hamamatsu-shi Shizuoka Pref. (JP)
(74) Representative: Meissner, Peter E., Dipl.-Ing.

(56) References cited:
- EP-A- 0 062 506
- FR-A- 1 359 899
- GB-A- 2 126 173

## Description

The present invention retales to a motor vehicle with a structure according to the preamble of claim 1. Such a motor vehicle is known from FR-A-1359899.

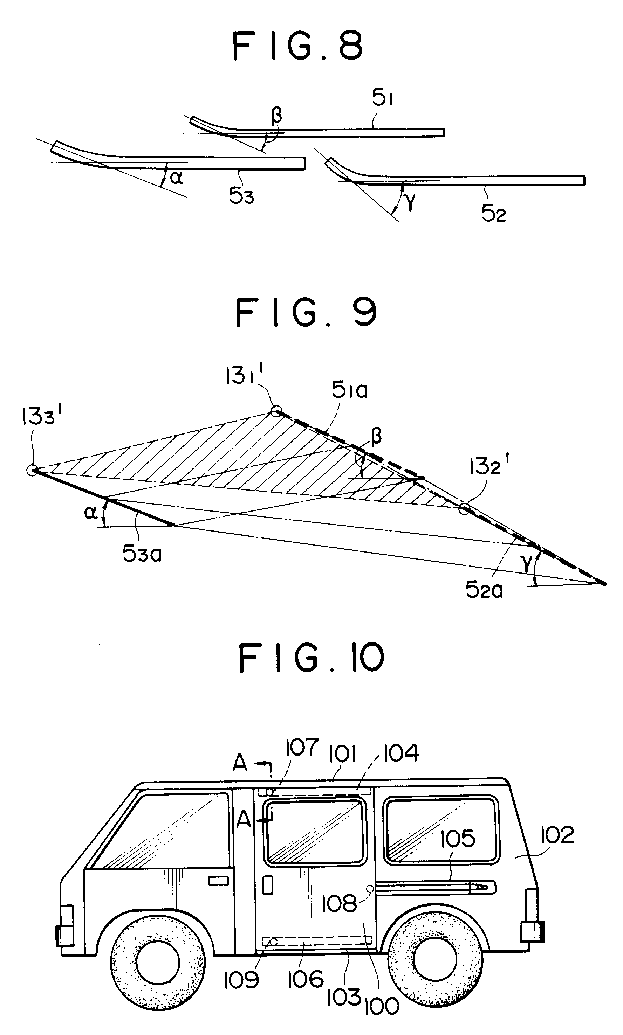

In a traditional one-box car having rectangular front doors 100 such as for example one shown in Fig. 10, upper, center end lower guide rails 104, 105 and 106 are provided on a roof panel 101, a rear quarter panel 102, a side sill 103 and the like respectively which constitute a side body of a vehicle, and roller assemblies 107, 108 and 109 which are provided on upper, middle and lower stage portions of inner panel of the front door 100 respectively are inserted into these guide rails 104, 105 and 106 to guide the door 100.

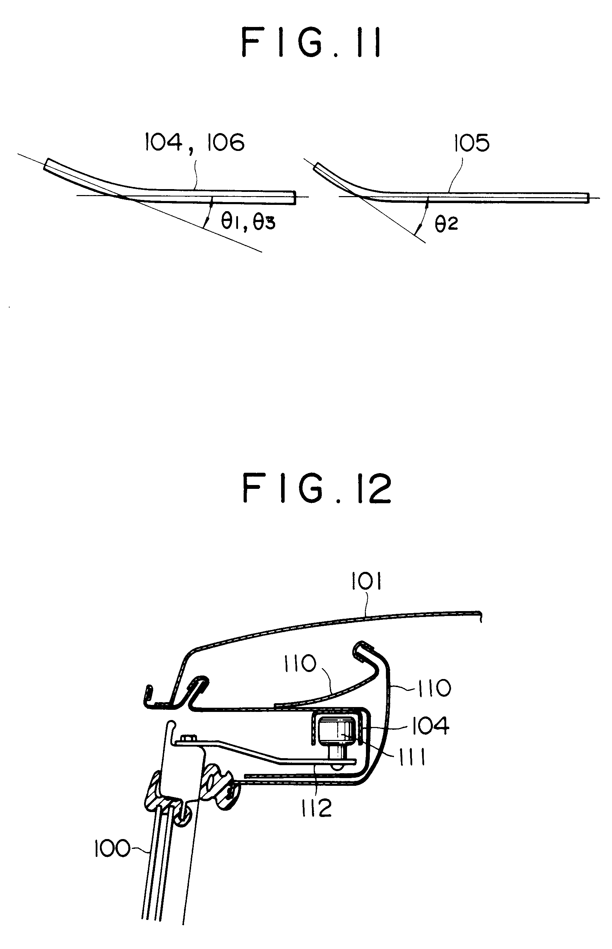

In such a prior art, above guide rails 104, 105 and 106 are formed with its top end curved inwardly so as to close the front door 100 as shown in Fig.11 in a schematic plan view of the door rail, and since roll assemblies 107 and 109 are attached to upper and lower stage portions of the door 100 on the same perpendicular line, the curved angle ϑ ₁ of the upper rail 104 is designed to be equal with the curved angle ϑ ₃ of the lower rail 106 independently of the curved angle ϑ ₂ of the center rail 105.

Fig. 12 is a view illustrating a portion of a upper guide rail 104, wherein there are additionally shown a roof panel 101, a roof rail 104, a upper guide rail 104 provided on the roof rail 110 and a guide roller 111 of the roller assembly 107 which engages the guide rail 104. The guide roller 111 is journalled in the top portion of the support arm 112 which is in turn threadably secured in position on the upper end portion of the front door 100.

When such a door is used in a motor-vehicle the door panel is shorter at its upper side than its lower side in length and thus if the upper roller is used the guide rail that serves to guide the upper roller becomes short in length, whereby limiting the opening amount of the door panel to the length of the guide rail to prevent a passenger from getting on and off the vehicle.

In the rectangular front door described above, upper and lower stages roller assemblies 107 and 109 can be mounted on the same perpendicular line, and thus the door 100 can be made to open and close itself in a plane-like movement without any torsion, collapse and the like by designing such upper and lower rails to have the same curved angles ϑ ₁ and ϑ ₃. However, where a front door for a passenger vehicle is of a sliding type, it may not be possible for upper and lower roller assemblies to be attached on the same perpendicular line. As a result, when the front end of the upper rail is formed to have the same curved angle as that for the lower rail, the door will entail in opening and closure an extremely complicated three-dimensional movement which may result in a torsion, collapse and the like. That movement may give an adverse effect on the engaging condition of a shut-stop and a sliding contact between a sealing rubber and a sealing surface of the door inner panel, and thereby impairing a smooth opening and closing movement of the door.

To overcome these problems, it is proposed-according to the invention-that the upper, lower and intermediate curved portions of said rails extend toward the vehicle body under different curve angles as mentioned in the second part of Claim 1.

Figures 1 through 9 illustrate one embodiment of the motor-vehicle with a front door according to the present invention, wherein;
Fig. 1 is a schematic view of the front door showing when it is removed away from the motor-vehicle;
Fig. 2 is a perspective view of the front door showing when it is closed;
Fig. 3 is a schematic view of the front door showing while it is being opened;
Fig. 4 is a cross-sectional perspective view taken along the line A-A of Fig.2;
Fig. 5 is a cross-sectional perspevtive view taken along the line A-A of Fig.3;
Fig. 6 is a cross-sectional view taken along the line B-B of Fig. 3;
Fig. 7 is a partially cut-away view of the motor-vehicle shown in Fig. 1;
Fig. 8 is a schematic view of the guide rail showing when it is viewed from the upper direction;
Fig. 9 is a schematic view of the curved top end of the guide rails showing their mutual positional relationship;
Fig. 10 is side plan view of the motor-vehicle having a traditional structure of the guide rail;
Fig. 11 is a schematic view of the guide rails showing their mutual positional relationship when they are viewed from a upper direction;
Fig. 12 is a cross-sectional view taken along the line A-A of Fig. 10.

One embodiment of the present invention will be described in details hereinbelow, with reference to several accompaning drawings.

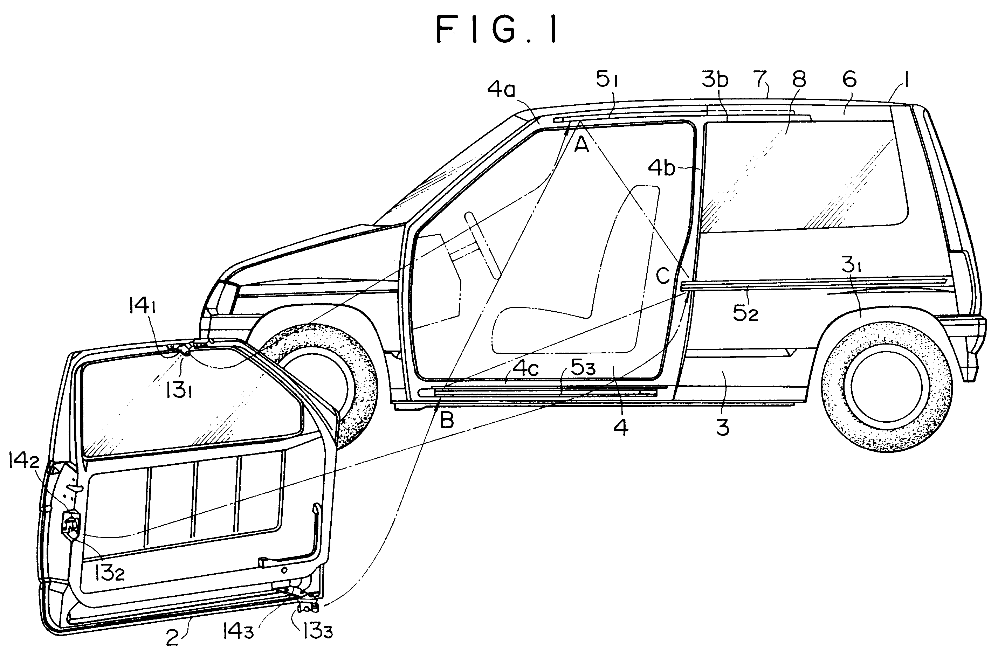

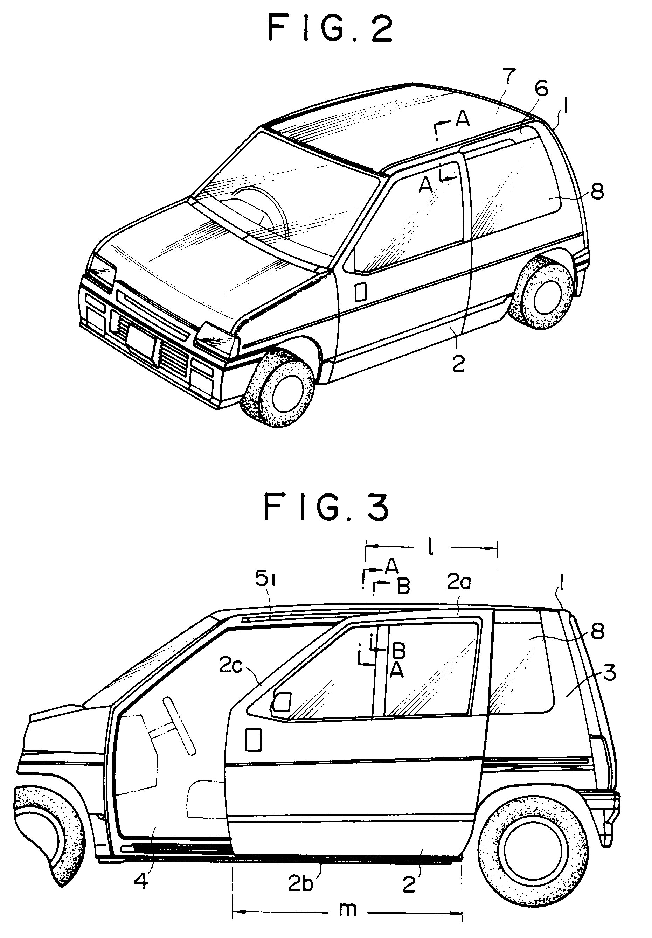

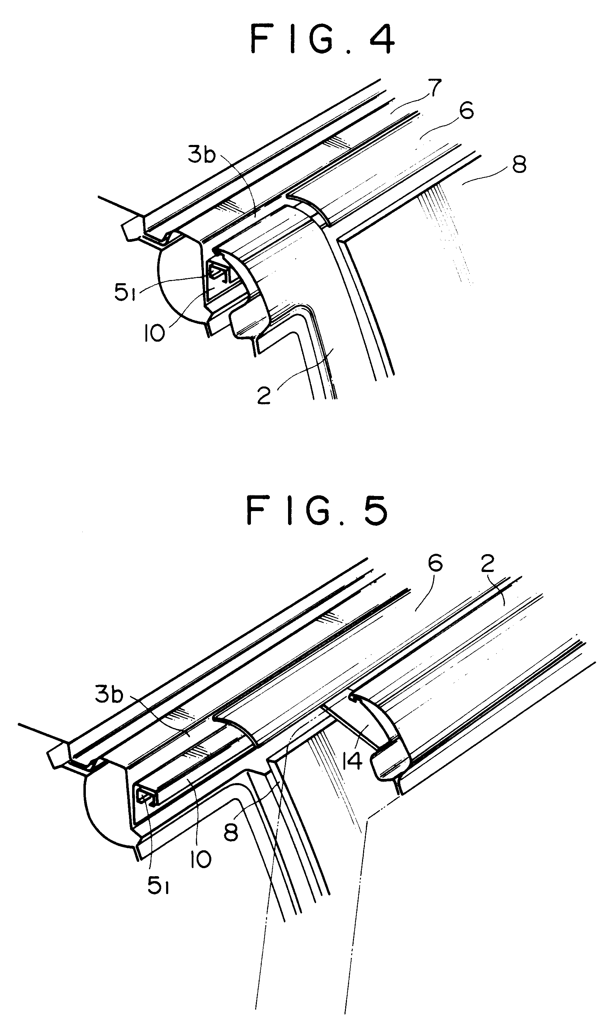

Figures 1 through 6 illustrate a vehicle body of a passenger car type motor-vehicle 1 having a sliding door 2 as a front door. The body has a aperture 4 in a side panel 3, the aperture 4 being adapted to receive the front door 2 as a passenger access opening. The aperture 4 has a front pillar diagonally formed to provide a pentagon configuration. The door 2 has the same configuration as that of a door of ordinary motor-vehicle, i.e., a pentagon configuration, wherein the length l of its upper side 2a is made shorter than its lower side 2b with an inclined portion 2c being formed to extend from the upper side 2a to its front end.

Secured to the upper and lower edges 4a and 4c of the aperture 4 are upper and lower guide rails 5₁ and 5₃, while an intermediate guide rail 5₂ is provided on a side panel backwardly of a backward side edge 4b, the intermediate guide rail 5₂ being oriented in the same direction as the upper and the lower guide rails 5₁ and 5₃. The door 2 is mounted in position at three points A, B and C on these upper, intermediate and lower guide rails 5₁, 5₂ and 5₃ through the upper, intermediate and lower guide rollers (to be described later).

The side panel 3 is formed from the upper edge 4a of the aperture 4 such that a rearward panel portion 3b may be in the same plane as the upper edge 4a. A upper guide rail 5₁ is entended up to this panel portion 3b. This arrangement permits the upper guide rail 5₁ to have the same length as the lower guide rail 5₃.

There is a quater-garnish 6 provided midway between the center pillar of a roof panel 1 and a rear pillar. The quater-garnish 6 is formed with a configuration that may permit it to be contiguous with the roof panel 7 and cover the rear end of the upper guide rail 5₁. A portion of the lower edge of the quarter-garnish is provided with a step 9 which serves to form a clearance between it and a quarter window 8, having a mounting flange 6a and an engaging pawl 6b provided on a backside thereof.

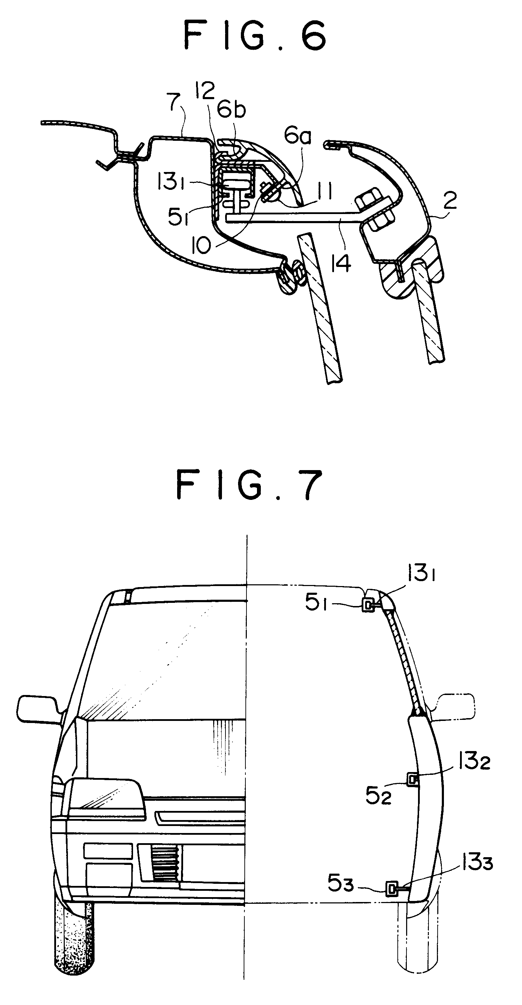

The mounting of the quater-garnish 6 is accomplished by securing the mounting flange 6a by means of a screw 11 to a mounting panel 10 which has been attached to the panel portion 3b as shown in Fig. 6. Then, the engaging pawl 6b is brought into engagement with an engaging portion 12 formed in the upper surface of the mounting panel 10.

The intermediate guide rail 5₂ is provided in a rail receiving groove 3₁ which is defined in the side panel 3 along its entire length. The garnish 6₂ (the center-garnish) is provided in the rear end portion of the rail receiving groove 3₁ in such a manner that the garnish 6₂ may cover an area of the rail receiving groove 3₁ where the rail 5₂ is not present.

On the other hand, the front door 2 is provided with guide rollers 13₁,13₂ and 13₃ which engage the upper, intermediate and lower guide rails 5₁, 5₂ and 5₃ respectively. The upper guide roller 13₁ is supported by a upper support arm 14 which is secured in place on the top end of the upper side of the front door 2 backwardly of the lower guide roller 13₃.

The lower guide roller 13₃ is supported by a lower portion support arm 14₃ which is secured in place on the top end on the lower side of the front door 2. The intermediate guide roller 13₂ is supported by a center portion support arm 14₂ which is secured in place on the center portion of the rear side edge of the door 2.

The top ends of above guide rails 5₁, 5₂ and 5₃ are curved inwardly so as to close the front door 2 as shown in Figs. 7 - 8 having their curved angles related to one another.

Referring to Fig. 9 for such an angular relationship, guide rollers 13₁, 13₂ and 13₃ which are provided on upper, center and lower stages respectively are plotted during the door closure for their positions as looked from a upper direction, and then are moved along the curved angle of the curved top end of the lower rail 5₃ so as to maintain on a plane a triangular which is to be formed by a line connecting three positions 13'₁, 13'₂ and 13'₃. A line along a locus of other apexes of the triangle is used to form the shape of curved top ends of the upper rail 5, and the intermediate rail 5₂ and their curved angles β and γ .

Where the curved angle γ of the intermediate rail 5₂ is formed to be larger than the curved angle α of the lower rail 5₃, the curved angle β of the upper rail will be an angle in a range between the angles α and γ as shown in Fig. 9.

In an above arrangement, the front door 2 is caused to open by permitting guide rollers 13₁, 13₂ and 13₃ to roll along upper, intermediate and lower guide rails 5₁, 5₂ and 5₃ when the opening of the door 2 is attempted. At this moment, the upper guide roller 13₁ is caused to roll along the upper guide rails 5₁ to enter into a clearance between the quater-garnish 6 and the quarter-glass 8. In this manner, the door 2 may be opened to a maximum amount of the passenger access aperture 4.

A relationship between each of guide rails 5₁, 5₂ and 5₃ and guide rollers 13₁, 13₂ and 13₃ which may exist at this moment will be described hereinbelow.

Other guide rails 5₁ and 5₂ are designed such that their configuration and angles may be invariably maintained when the curved top ends 5₁a, 5₂a and 5₃a of guide rails 5₁, 5₂ and 5₃ which are arranged to lie in parallel with the vehicle body are caused to move along a guide rail 5₃, the guide rail 5₃ providing a reference point for a relative positional relationship when looked from a upper direction, it becomes available to provide a guide rail structure of the sliding type door vehicle adapted to be opened and closed without entailing any torsion, collapse and the like. Furthermore, because the door can be moved in a simplified manner, it provides a superior engaging condition between shut-stops and a good sliding contact between a sealing rubber and a door inner panel. Thus, a sliding door type vehicle which ensures a good closing performance is provided.

As described hereinbefore, in a motor-vehicle with a door according to the present invention, it is available to adopt a sliding door as a front glass for a passenger type motor-vehicle of pentagon configuration, since the door is used as a front glass and the front portion of the door is formed with an inclined configuration so as to match the shape of front pillar.

Moreover, the upper guide roller is provided backwardly with respect to the lower guide roller and the upper guide rail is arranged to extend backwardly behind the above opening, and therefore the front door takes the same outlook as an ordinary door for a motor-vehicle and the door can be opened to the maximum amount of the passenger access aperture.

Moreover, according to the present invention, the upper guide roller is provided on the front part of the upper side of the front door, and the upper guide rail that serves to guide upper rollers is arranged to extend from the upper edge of the passenger access aperture to the backward portion of the vehicle body. While the vehicle body panel is provided at an area of the vehicle body where the above guide rail is kept away from the upper edge of the access aperture and it corresponds to the plane position of the passenger access aperture, a cover having the same configuration as that of outer panel of the vehicle body is provided at an exterior portion of the upper guide rail. A passage is formed along the lower edge of the cover to move the support arm of guide roller, and therefore the door may be appeared as the same as an ordinary door and may be opened fully to a maximum opening amount of the passenger access aperture.

Moreover, where a door of the shapes other than rectangular is used as a door in a front glass for a passenger type vehicle, the present invention can provide a door which can be opened and closed without entailing any torsion and collapse etc., in a very simplified manner Furthermore, the movement of the door itself is simplified to improve an engaging condition between shut- stops and a sliding contact between a sealing rubber and a door inner panel. Thus, a door with a very good closing function is provided.

## Claims

1. A motor vehicle comprising a structure having an aperture (4) and a front door (2) for closing said aperture (4), whereby the door (2) is able to be moved across and into and out of the aperture (2), an upper and a lower guide rails (5₁, 5₃) being fixed to the structure in a parallel spaced relationship straddling the aperture (4) such that the upper guide rail (5₁), having the same length as the lower guide rail (5₃), is offset horizontally with respect to the latter (5₃) and continues backwardly beyond the aperture (4), an intermediate guide rail (5₂) being fixed to the structure backwardly beyond the aperture (4) between and in a parallel spaced relationship to the upper and lower guide rails (5₁, 5₃), upper, lower and intermediate guide members (13₁, 13₃, 13₂) being mounted on the door and cooperating with the upper, lower and intermediate guide rails (5₁, 5₃, 5₂) for movement therealong to support the door (2) and to guide it in movement along the guide rails (5₁, 5₃, 5₂) crosswise of the aperture, upper, lower and intermediate curved portions on the upper, lower and intermediate guide rails (5₁, 5₃, 5₂) respectively along which the upper, lower and intermediate guide members (13₁, 13₃, 13₂) of the door are movable to cause respective adjacent ends of the door (2) to be directed into or out of the aperture (4) transversely of the direction of crosswise movement of the door, characterised in that the upper, lower and intermediate curved portions extend towards the vehicle body under different curve angles (β,α,γ), the lower curve angle (α) is greater than the upper curve angle (β), but smaller than the intermediate curve angle (γ) such that the outer surface of the door (2) in its closing position lies flush with the outer surface of the vehicle body .

2. A motor vehicle according to claim 1,
characterized in
that a quarter garnish (6) formed, so as to have an external form extending to the roof panel is provided covering the rear end of the upper guide rail (5₂), said quarter garnish (6) is provided with a step which forms a clearance between it and the side window (8) permitting a support arm (14) secured to the top end of the upper side of the door (2) to pass therethrough.

## Patentansprüche

1. Kraftfahrzeug mit einer Struktur, die eine Öffnung (4) und eine Fronttüre (2) zum Schließen dieser Öffnung (4) hat, wobei die Türe (2) über die Öffnung (4) und in diese hinein und aus dieser heraus bewegt werden kann, einer oberen und einer unteren Führungsschiene (5₁, 5₃), die in paralleler, räumlich getrennter Beziehung befestigt sind und die Öffnung (4) derart spreizen, daß die obere Führungsschiene (5₁), die die gleiche Länge wie die untere Führungsschiene (5₃) hat, horizontal in bezug auf die letztere (5₃) versetzt ist und weiter nach hinten über die Öffnung (4) hinausläuft, einer mittleren Führungsschiene (5₂), die rückwärtig hinter der Öffnung (4) an der Struktur befestigt ist, und zwar zwischen und in räumlich getrenter Beziehung zu der oberen und der unteren Führungsschiene (5₁, 5₃), oberen, unteren und mittleren Führungsbauteilen (13₁, 13₃, 13₂), die an der Türe befestigt sind und mit den oberen, unteren und mittleren Führungsschienen (5₁, 5₃, 5₂) korrespondieren, um sich daran entlang zu bewegen und die Türe (2) zu tragen und um sie in ihrer Bewegung kreuzweise zur Öffnung (4) entlang der Führungsschienen (5₁, 5₃, 5₂) zu führen, oberen, unteren und mittleren gekrümmten Bereichen auf den oberen, unteren und mittleren Führungsschienen (5₁, 5₃, 5₂), die jeweils zusammen mit den oberen, unteren und mittleren Führungsbauteilen (13₁, 13₃, 13₂) der Türe bewegbar sind, damit jeweils benachbarte Enden der Türe (2) in die Öffnung (4) hinein und aus dieser heraus gerichtet werden können, und zwar quer zur kreuzweisen Bewegung der Türe,
dadurch gekennzeichnet,
daß sich die oberen, unteren und mittleren gekrümmten Bereiche unter verschiedenen Kurvenwinkeln (β , α , γ) in Richtung des Fahrzeugkörpers erstrecken, daß der untere Kurvenwinkel (α) größer als der obere Kurvenwinkel (β) jedoch kleiner als der mittlere Kurvenwinkel (γ) ist, so daß die äußere Oberfläche der Türe (2) in ihrer geschlossenen Position in einer Ebene mit der äußeren Oberfläche des Fahrzeugkörpers liegt.

2. Kraftfahrzeug nach Anspruch 1,
dadurch gekennzeichnet,
daß eine vierseitige Verzierung (6), die derart ausgebildet ist, daß sie eine die Dachverkleidung verlängernde äußere Form hat, vorgesehen ist, die das rückwärtige Ende der oberen Führungsschiene (5₂) abdeckt, daß die vierseitige Verzierung (6) mit einer Stufe vorgesehen ist, die einen Abstand zwischen dieser und dem Seitenfenster (8) bildet, wodurch einem Tragarm (14), der an dem vorderen Ende von der oberen Seite der Türe (2) befestigt ist, gestattet wird, durch diesen hindurchzulaufen.

## Revendications

1. Véhicule à moteur, comprenant une structure ayant une ouverture (4) et une porte avant (2) pour fermer ladite ouverture (4), la porte (2) pouvant être déplacée à travers et dans et hors de l'ouverture (2), un rail de guidage supérieur (5₁) et un rail de guidage inférieur (5₃) étant fixés à la structure dans une relation parallèlement espacée chevauchant l'ouverture (4), de sorte que le rail de guidage supérieur (5₁), ayant la même longueur que le rail de guidage inférieur (5₃), est décalé horizontalement par rapport à ce dernier (5₃) et se poursuit en arrière au-delà de l'ouverture (4), un rail de guidage intermédiaire (5₂) étant fixé à la structure en arrière au-delà de l'ouverture (4) entre et en une relation parallèlement espacée vis-à-vis des rails de guidage supérieur et inférieur (5₁,5₃), des organes de guidage supérieur, inférieur et intermédiaire (13₁,13₃,13₂) étant montés sur la porte et coopérant avec les rails de guidage supérieur, inférieur et intermédiaire (5₁,5₃,5₂) pour se déplacer le long de ceux-ci pour supporter la porte (2) et la guider en mouvement le long des rails de guidage (5₁,5₃,5₂) transversalement à l'ouverture, des parties incurvées supérieure, inférieure et intermédiaire sur les rails de guidage supérieur, inférieur et intermédiaire (5₁,5₃,5₂) respectivement le long desquelles les organes de guidage supérieur, inférieur et intermédiaire (13₁,13₃,13₂) de la porte sont déplaçables pour diriger dans et hors de l'ouverture (4), transversalement à la direction du mouvement transversal de la porte, des extrémités adjacentes respectives de la porte (2),
caractérisé en ce que les parties incurvées supérieure, inférieure et intermédiaire s'étendent vers le corps du véhicule sous différents angles de courbure (β,α,γ), l'angle de courbure inférieur (α) étant plus grand que l'angle de courbure supérieur (β), mais plus petit que l'angle de courbure intermédiaire (γ), de sorte que la surface externe de la porte (2), dans sa position de fermeture, se trouve à fleur de la surface externe du corps du véhicule.

2. Véhicule à moteur selon la revendication 1,
caractérisé en ce qu'une garniture en quart de rond (6), formée de façon à présenter une forme externe s'étendant vers le panneau de toit, est prévue couvrant l'extrémité arrière du rail de guidage supérieur (5₂), ladite garniture (6) étant munie d'un décrochement qui forme un espace entre elle et la vitre latérale (8) permettant à un bras de support (14) fixé à l'extrémité supérieure du bord supérieur de la porte de passer au travers.
